# EUROPEAN PATENT APPLICATION

(11) **EP 2 085 364 A1**
(43) Date of publication of application: **05.08.2009**
(21) Application number: 08150925.9
(22) Date of filing: 31.01.2008
(51) Int. Cl.: C02F 1/76, C02F 1/58

(54) **Process for degrading organic substances in an aqueous composition**

(71) Applicant: SOLVAY (Société Anonyme), 1050 Bruxelles (BE)
(72) Inventor: Gilbeau, Patrick, 7090 Braine-le-Comte (BE)
(74) Representative: Vande Gucht, Anne

(57) **Abstract**

Process for degrading organic substances in an aqueous composition comprising a step (a) wherein, in a liquid reaction medium, at a controlled pH, said aqueous composition is reacted with at least one composition comprising hydroxide ions (OH⁻) and hypochlorite in a molar ratio between hydroxide and hypochlorite higher than or equal to 0.001 and lower than 1.5, in order to oxidize said organic substances

## Description

The present invention is related to a process for degrading substances in an aqueous composition. More specifically it relates to a process for degrading organic substances present in aqueous compositions, by oxidation.

Organic substances are typical contaminants of aqueous effluents originating in chemical processes. Degrading organic contaminants in waste water is a prerequisite before the disposal of such effluent, e.g., before the rejection in environment, since the organic contaminants contributes to the Chemical Oxygen Demand of the effluents, a measure of their oxygen depleting impact on the environment, or when a recycling of the effluent is envisioned.

Chlorine is a reactant currently used for degrading organic contaminants in water by oxidation. Using chlorine as a source of oxidation agent presents however several drawbacks. Chlorine is a toxic gas. It also reacts with organic compounds to substitute chlorine for hydrogen, yielding chlorinated organic compounds, usually both toxic and more difficult to oxidize. It can also lead to undesirable production of chlorates.

The goal of the present invention is to provide a process for degrading organic compounds which does not present such drawbacks.

In a first embodiment, the invention therefore relates to a process for degrading organic substances in an aqueous composition comprising a step (a) wherein, in a liquid reaction medium, at a controlled pH, said aqueous composition is reacted with at least one composition comprising hydroxide ions (OH⁻) and hypochlorite in a molar ratio between hydroxide and hypochlorite higher than or equal to 0.001 and lower than 1.5, in order to oxidize said organic substances.

The aqueous solution containing the organic substances to be degraded will also be referred as the aqueous solution to be treated subsequently.

The organic substances which are present in the aqueous composition to be treated can be organic aliphatic substances, organic aromatic substances, or mixtures thereof. Those substances can optionally contain at least one heteroatom, selected from halogens, preferably fluorine, chlorine, bromine, iodine, chalcogens, preferably oxygen or sulfur, nitrogen, phosphorus and mixture thereof, and selected more preferably from chlorine, oxygen and mixture thereof.

The aliphatic substances can be cyclic, acyclic, saturated or unsaturated hydrocarbons. Those hydrocarbons are cyclic or acyclic alkanes and alkenes, halogenated cyclic or acyclic alkanes and alkenes, preferably chlorinated, saturated and/or unsaturated aliphatic and/or alicyclic ethers, saturated and/or unsaturated halogenated aliphatic and/or alicyclic ethers, preferably chlorinated, alcohols and halogenated alcohols, preferably chlorinated, ketones and halogenated ketones, preferably chlorinated, aldehydes and halogenated aldehydes, preferably chlorinated, and/or carboxylic acids and halogenated, carboxylic acids, preferably chlorinated.

The aliphatic substances are preferably selected from trichloropropane, preferably 1,2,3-trichloropropane, chloropropenol, preferably 2-chloro-2-propen-1-ol, dichloropropenes, preferably 1,3-dichloropropene cis and 1,3-dichloropropene trans, dichloropropane, preferably 1,3-dichloropropane, dichloropropanols, preferably, 1,3-dichloro-2-propanol and 2,3-dichloro-1-propanol, monochloropropanediols, more preferably 2-chloro-1,3-propanediol and 3-chloro-1,2-propanediol, 2-chloro-1-propanol, 1-chloro-2-propanol, chloroethanol, chloroethers, more preferably chloroethers of crude formula C₆H₁₀Cl₂O₂, C₆H₁₂Cl₂O, C₆H₉Cl₃O₂, C₆H₁₁Cl₃O₂, acrolein, methyl glycidyl ether, chloroacetone, glycerol, ethylene glycol, propylene glycol, butane-1,2-diol, hydroxyacetone, glyceraldehyde, formaldehyde, acetaldehyde, acrolein, formic acid, glycolic acid, acetic acid, propionic acid, lactic acid, glycidol, epichlorohydrin, ethylene oxide, propylene oxide, butylene oxide and mixture thereof.

The aromatic substances comprise at least one ring of aromatic nature. They are preferably halogenated aromatic hydrocarbons comprising at least one ring of aromatic nature and one halogen atom. The halogen may be chosen from fluorine, chlorine, bromine, iodine, and is preferably chlorine. The aromatic ring may be mono or polynuclear and is preferably mononuclear. The aromatic substances are preferably selected from mono-, di-, tri-, tetra-, penta- and hexachloro-benzenes and/or naphthalenes, and mixture thereof. The aromatic substance is preferably monochlorobenzene. The aromatic substance may also be oxygenated like phenol, mono- et polychlorophenol, preferably phenol.

The content of the organic substance in the aqueous composition to be treated is usually such that the total organic carbon (TOC) of the aqueous composition to be treated is higher than or equal to 0.1 g C/kg, preferably higher than or equal to 0.5 g C/kg and more preferably higher than or equal to 1 g C/kg. That TOC is usually lower than or equal to 20 g C/kg, preferably lower than or equal to 10 g C/kg and more preferably lower than or equal to 5 g C/kg.

The content of the organic substance in the aqueous composition to be treated is usually such that the chemical oxygen demand (COD) of the aqueous composition to be treated is higher than or equal to 0.25 g O/kg, preferably higher than or equal to 1.25 g O/kg and more preferably higher than or equal to 2.5 g O/kg. That COD is usually lower than or equal to 50 g O/kg, preferably lower than or equal to 25 g O/kg and more preferably lower than or equal to 15 g O/kg.

The aqueous composition to be treated generally contains inorganic compounds, like salts for instance. The salts can be organic salts, inorganic salts or mixture thereof. The inorganic salts are preferred. Inorganic salts are salts for which the constitutive cations and anions do no contain any carbon-hydrogen bond. The inorganic salts are selected from alkaline or alkaline-earth chlorides, sulfates, hydrogen sulfates, hydroxides, carbonates, hydrogen carbonates, phosphates, hydrogen phosphates, borates and any mixture thereof, preferably from alkaline or alkaline-earth chlorides, more preferably from sodium and potassium chloride and the salt is most preferably sodium chloride.

The salt content of the aqueous composition to be treated is usually higher than or equal to 30 g/kg of composition to be treated, preferably higher than or equal to 50 g/kg, more preferably higher than or equal to 100 g/kg, still more preferably higher than or equal to 140 g/kg, yet more preferably higher than or equal to 160 g/kg and most preferably higher than or equal to 200 g/kg. That salt content is usually lower than or equal to 270 g/kg of composition to be treated, preferably lower than or equal to 250 g/kg and most preferably lower than or equal to 230 g/kg.

The aqueous solution to be treated can originate from any process, preferably from processes generating brines contaminated by organic substances. Those are for instance processes for manufacturing epoxides, preferably ethylene oxide, propylene oxide, butylene oxide or epichlorohydrin, processes for manufacturing chlorinated organic compounds, preferably dichloroethane, processes for manufacturing mono- and polyisocyanates, preferably 4,4'-methylenediphenyl diisocyanate (MDI) or toluene diisocyanate (TDI) or hexamethylen-1,6-diisocyanate (HDI). The aqueous composition to be treated can be a mixture of aqueous compositions originating from at least two different manufacturing processes.

The composition containing hypochlorite can be a solid, a solution or a suspension. It is preferably a solid or a solution, and more preferably a solution.

The expression hypochlorite is here intended to designate any compound selected from hypochlorous acid (HOCl), a salt from hypochlorous acid, or a mixture thereof.

The salt from hypochlorous acid can be an organic salt, an inorganic salt or a mixture thereof. This salt is preferably an inorganic salt, preferably selected from ammonium hypochlorite, metal salts of hypochlorite and mixture thereof, more preferably selected from alkaline and alkaline-earth metal hypochlorite, and mixture thereof, still more preferably selected from sodium and calcium hypochlorite, and mixture thereof and this salt is most preferably sodium hypochlorite.

The aqueous composition containing hypochlorite is preferably a solution containing sodium hypochlorite.

The aqueous composition containing hypochlorite and hydroxide ions may in addition contain chlorate.

The expression chlorate is here intended to designate any compound selected from chloric acid (HClO₃), a salt from chloric acid, or a mixture thereof.

The salt from chloric acid can be an organic salt, an inorganic salt or a mixture thereof. This salt is preferably an inorganic salt, preferably selected from ammonium chlorate, metal salts of chlorate and mixture thereof, more preferably selected from alkaline and alkaline-earth metal chlorate, and mixture thereof, still more preferably selected from sodium and calcium chlorate, and mixture thereof and this salt is most preferably sodium chlorate.

The aqueous composition containing hypochlorite and hydroxide ions is preferably a solution containing sodium chlorate.

The chlorate molar content of the aqueous composition containing chlorate, hypochlorite and hydroxide ions is usually higher than or equal to 0.1 mmol chlorate/kg, often higher than or equal to 1 mmol/kg, frequently higher than or equal to 2 mmol/kg and more specifically higher than or equal to 5 mmol/kg. That content is usually lower than or equal to 100 mmol chlorate/kg, often lower than or equal to 50 mmol/kg, frequently lower than or equal to 20 mmol/kg and more specifically lower than or equal to 10 mmol/kg.

The aqueous composition containing hypochlorite also contains hydroxide ions OH⁻ in a molar ratio between hydroxide and hypochlorite ([OH⁻] / [ClO⁻]') higher than or equal to 0.001 and lower than to 1.5. The molar content of hypochlorite ([ClO⁻]') is here intended to designate the sum of the molar contents of hypochlorous acid and salt of hypochlorous acid in the aqueous composition containing hypochlorite. That molar ratio ([OH⁻]/[ClO⁻]') is preferably higher than or equal to 0.01 and more preferably higher than or equal to 0.05, still more preferably higher than or equal to 0.1, yet more preferably higher than or equal to 0.2 and most preferably higher than or equal to 0.75. That molar ratio is preferably lower than or equal to 1.4, more preferably lower than or equal to 1.2 and most preferably lower than or equal to 1.0.

The aqueous composition containing hypochlorite and hydroxide ions can contain other compounds, like a salt different from the hypochlorous acid salt. That salt can be an organic salt, an inorganic salt or a mixture thereof. The salt is preferably an inorganic salt, preferably selected alkaline or alkaline-earth chlorides, sulfates, hydrogen sulfates, carbonates, hydrogen carbonates, phosphates, hydrogen phosphates, borates and any mixture thereof, preferably from alkaline or alkaline-earth chlorides, more preferably from sodium and potassium chloride and the salt is most preferably sodium chloride. This salt usually results from the process used for preparing the aqueous composition containing hypochlorite.

The salt content, not including the possible salt of hypochlorous acid, of the aqueous composition containing hypochlorite and hydroxide ions is usually higher than or equal to 30 g/kg of composition to be treated, preferably higher than or equal to 50 g/kg, more preferably higher than or equal to 100 g/kg, still more preferably higher than or equal to 140 g/kg, yet more preferably higher than or equal to 160 g/kg and most preferably higher than or equal to 200 g/kg. That salt content is usually lower than or equal to 270 g/kg of composition to be treated, preferably lower than or equal to 250 g/kg and most preferably lower than or equal to 230 g/kg.

The aqueous composition containing hypochlorite and hydroxide ions can be obtained by any means, preferably by dissolving gaseous chlorine in water containing a basic compound like for instance, ammonium hydroxide, an alkaline hydroxide, an alkaline earth hydroxide, or a mixture thereof. Water containing a sodium hydroxide or a calcium hydroxide or a mixture thereof is preferred and water containing sodium hydroxide is more preferred.

The hypochlorite molar content of the aqueous composition containing hypochlorite and hydroxide ions is usually higher than or equal to 0.1 mol hypochlorite/kg, preferably higher than or equal to 0.5 mol/kg, more preferably higher than or equal to 1 mol/kg and most preferably higher than or equal to 1.3 mol/kg. That content is usually lower than or equal to 5 mol hypochlorite/kg, preferably lower than or equal to 3 mol/kg, more preferably lower than or equal to 2 mol/kg and most preferably lower than or equal to 1.7 mol/kg.

The amount of the aqueous composition containing hypochlorite and hydroxide ions added to the aqueous composition to be treated is usually such that the molar ratio between the hypochlorite added and the DCO (expressed in mol of O) of the aqueous composition to be treated, before reaction, is higher than or equal to 1, preferably higher than or equal to 1.2 and most preferably higher than or equal to 1.4. That amount is usually such that the molar ratio between the hypochlorite added and the DCO (expressed in mol of O) of the aqueous composition to be treated, before reaction, is lower than or equal to 8, preferably lower than or equal to 4 and most preferably lower than or equal to 3.

The liquid reaction medium may be a single-phase or multi-phase medium.

The liquid reaction medium is composed of all of the dissolved or dispersed solid compounds, dissolved or dispersed liquid compounds and dissolved or dispersed gaseous compounds at the temperature and pressure of the reaction. The liquid reaction medium is preferably a multi-phase medium.

The process according to the invention can be carried out under discontinuous, continuous or semi-continuous mode. The continuous mode is preferred.

In the process according to the invention, the pH at which the reaction of step (a) is carried out is controlled. The pH is generally higher than or equal to 6, preferably higher than or equal to 7 and most preferably higher than or equal to 8. That pH is generally lower than or equal to 11, preferably lower than or equal to 10 and most preferably lower than or equal to 9. The pH has to be maintained at such set values since pH changes occur during the course of the oxidation reaction. The pH can be maintained at said values either by addition of an acidic compound or by addition of a basic compound. Any acidic or basic compounds can be used to maintain the pH. Inorganic acids and inorganic bases are preferred. Hydrogen chloride, gaseous and/or in aqueous solution, is a more preferred acidic compound. Sodium or calcium hydroxides, solids and/or in aqueous solution and/or suspensions, are more preferred basic compounds, with sodium hydroxide aqueous solutions being most preferred.

In the process according to the invention, the temperature at which the reaction of step (a) is carried out, is usually higher than or equal to 10 °C, preferably higher than or equal to 30 °C, more preferably higher than or equal to 60 °C and most preferably higher than or equal to 80°C. That temperature is usually lower than or equal to 200 °C, preferably lower than or equal to 180 °C, more preferably lower than or equal to 160 °C and most preferably lower than or equal to 135 °C.

In the process according to the invention, the reaction of step (a) can be carried out under a pressure of 1 bar absolute, under a pressure above 1 bar absolute or under a pressure below 1 bar absolute. It is preferred to carry out the reaction of step (a) under a pressure that is regulated or set between 1 and 11 bar absolute, more preferably under a pressure of 1.1 to 7 bar and most preferably under a pressure of 1.1 to 4 bar.

It is preferred to carry out the reaction at the boiling temperature of the liquid reaction medium. Such a procedure has the advantage of allowing the removal of heat sensitive and/or volatile compounds formed during the reaction, for instance bicarbonate, carbonic acid and carbon dioxide.

In the process according to the invention, when step (a) of the process is carried out under discontinuous mode, the duration of the reaction of step (a) is generally higher than or equal to 0.05 h, preferably higher than or equal to 0.1 h, more preferably higher than or equal to 0.2 h and most preferably higher than or equal to 0.5 h. That duration is usually lower than or equal to 8 h, preferably lower than or equal to 4 h, more preferably lower than or equal to 2 h and most preferably lower than or equal to 1 h. The duration is counted from the time of addition of the composition containing hypochlorite to the aqueous solution to be treated.

In the process according to the invention, when step (a) of the process is carried out under continuous mode, the residence time of the reaction of step (a) is usually higher than or equal to 0.05 h, preferably higher than or equal to 0.1 h, more preferably higher than or equal to 0.2 h and most preferably higher than or equal to 0.5 h. That residence time is usually lower than or equal to 8 h, preferably lower than or equal to 4 h, more preferably lower than or equal to 2 h and most preferably lower than or equal to 1 h The residence time is defined by the ratio between the volume of the liquid reaction medium and the flow of the liquid reaction medium.

In the process according to the invention, the reaction of step (a) can be carried out in one or more reaction zones, preferably in at least two reaction zones and more preferably in at least three reaction zones. The reactions zones may be composed of volumes assembled in a single jacket or volumes in separate jackets. In the case where the volumes are assembled in a single jacket, the reaction zones may be positioned horizontally or vertically with respect to one another. In any case, the transfer from one zone to another may take place by gravity or by forced circulation. These reaction zones may be placed in any configuration, in series, in parallel or some in series and others in parallel. These reactions zones can be operated under any type of regime, like for instance perfectly mixed regime or plug flow regime. It is preferred that at least one of the zone is operated under perfectly mixed regime and at least another one is operated under plug flow regime, and it is more preferred that the zone operating under plug flow regime is located after the zone operating under perfectly mixed regime. Such conditions are especially well suited when the process is carried out under continuous mode.

In the process according to the invention, the reaction zones may be supplied independently of one another, with the aqueous composition to be treated, with the aqueous composition containing the hypochlorite, with any other compositions, or with at least two of these compositions. The other composition may comprise for instance the acidic or the basic compound used to adjust the pH of the liquid reaction medium, or a stripping gas to remove volatile reactions products. When several reaction zones are in series, it is preferred to supply the major part of the aqueous composition containing the hypochlorite in the first reaction zone of the series. The pH of the liquid reaction medium is preferably adjusted independently in the different reaction zones of the series.

The expression "reaction zones" is understood to mean zones where all the conditions needed for the oxidation reaction are found.

The aqueous composition obtained after the reaction of step (a) exhibits usually reduced COD and TOC levels.

The TOC of the aqueous composition after the reaction step is usually lower than or equal to 100 mg C/kg, preferably lower than or equal to 60 mg C/kg and more preferably lower than or equal to 20 mg C/kg. That TOC is usually higher than or equal to 0.1 mg C/kg.

The COD of the aqueous composition after the reaction step is usually lower than or equal to 250 mg O/kg, preferably lower than or equal to 150 mg O/kg and more preferably lower than or equal to 50 mg O/kg. That COD is usually higher than or equal to 1 mg O/kg.

The compounds responsible for the COD and TOC in the aqueous composition after the reaction of step (a) may be selected from the organic compounds present in the aqueous composition to be treated mentioned above and that have not been oxidized, but also from carboxylic acids, aldehydes, ketones or any mixtures thereof.

The carboxylic acids are preferably selected from monocarboxylic and/or polycarboxylic acids containing from 1 to 10 carbon atoms, and more preferably from formic acid, acetic acid, propionic acid, butyric acid, oxalic acid, succinic acid, adipic acid, glycolic acid, lactic acid, acetyl benzoic acid (acetol) and any mixture thereof.

The ketone is preferably acetone.

The aldehydes are preferably selected from formaldehyde, acetaldehyde, propionaldehyde, butyraldehyde, glyceraldehyde, acrolein, and any mixture thereof.

The aqueous composition obtained after the reaction of step (a) exhibits usually a chlorate ([ClO₃⁻]') content which is usually lower than or equal to 200 mmol ClO₃⁻/kg, preferably lower than or equal to 100 mmol ClO₃⁻/kg and more preferably lower than or equal to 50 mmol ClO₃⁻/kg. That chlorate content is usually higher than or equal to 0.01 mmol ClO₃⁻/kg. The molar content of chlorate ([ClO₃⁻]') is here intended to designate the sum of the molar contents of chloric acid and salt of chloric acid in the aqueous composition.

The aqueous composition obtained after the reaction of step (a) exhibits usually a hypochlorite ([ClO⁻]') content which is usually lower than or equal to 100 mmol ClO⁻/kg, preferably lower than or equal to 50 mmol ClO⁻/kg and more preferably lower than or equal to 20 mmol ClO⁻/kg. That hypochlorite content is usually higher than or equal to 0.001 mmol ClO⁻/kg.

The aqueous composition obtained after the reaction step exhibits usually a salt content, preferably an inorganic salt, preferably selected from alkaline or alkaline-earth chlorides, sulfates, hydrogen sulfates, carbonates, hydrogen carbonates, phosphates, hydrogen phosphates, borates, chlorates, hypochlorites and any mixture thereof, more preferably from alkaline or alkaline-earth chlorides, still more preferably from sodium and potassium chloride and most preferably from sodium chloride, usually higher than or equal to 30 g/kg of composition obtained after the reaction step, preferably higher than or equal to 50 g/kg, more preferably higher than or equal to 100 g/kg, still more preferably higher than or equal to 140 g/kg, yet more preferably higher than or equal to 160 g/kg and most preferably higher than or equal to 200 g/kg. That salt content is usually lower than or equal to 270 g/kg of composition, preferably lower than or equal to 250 g/kg and most preferably lower than or equal to 230 g/kg.

The aqueous composition obtained after the reaction step can be used as such as a starting material in an electrolysis process, preferably in an electrolysis process for producing chlorine.

In a second embodiment, the process for degrading organic substances in an aqueous composition comprises a further step (b), wherein, at least one part of the reaction medium of step (a) is subjected to an acidification operation in order to bring the pH at a second value lower than the pH value of step (a) and the organic substances are further oxidized.

In that embodiment, the pH at which the reaction of step (b) is carried out is generally higher than or equal to 0.01, preferably higher than or equal to 1 and most preferably higher than or equal to 2. That pH is generally lower than 6, preferably lower than or equal to 5.5 and most preferably lower than or equal to 5. The pH has generally to be maintained at such set values since pH changes occur during the course of the oxidation reaction. The pH can be maintained at said values either by addition of an acidic compound or by addition of a basic compound. The acidic operation can be carried out by adding an acidic compound to the reaction medium from step (a), as the one described above.

In that embodiment, the temperature at which the reaction of step (b) is carried out, is usually higher than or equal to 10 °C, preferably higher than or equal to 30 °C, more preferably higher than or equal to 60 °C and most preferably higher than or equal to 80°C. That temperature is usually lower than or equal to 200 °C, preferably lower than or equal to 180 °C, more preferably lower than or equal to 160 °C and most preferably lower than or equal to 135 °C.

In the process according to the invention, the reaction of step (b) is usually carried out under a pressure of 1 bar absolute, under a pressure above 1 bar absolute or under a pressure below 1 bar absolute. It is preferred to carry out the oxidation operation under a pressure that is regulated or set between 1 and 11 bar absolute, more preferably under a pressure of 1.1 to 7 bar and most preferably under a pressure of 1.1 to 4 bar.

In the process according to the invention, when step (b) of the process is carried out under discontinuous mode, the duration of the reaction of step (b) is usually higher than or equal to 0.05 h, preferably higher than or equal to 0.1 h, more preferably higher than or equal to 0.2 h and most preferably higher than or equal to 0.5 h. That duration is usually lower than or equal to 8 h, preferably lower than or equal to 4 h, more preferably lower than or equal to 2 h and most preferably lower than or equal to 1 h. The duration is counted from the time of pH change of the reaction medium arising from step (a) to be treated.

In the process according to the invention, when step (b) the process is carried out under continuous mode, the residence time of the reaction of step (b) is usually higher than or equal to 0.05 h, preferably higher than or equal to 0.1 h, more preferably higher than or equal to 0.2 h and most preferably higher than or equal to 0.5 h. That residence time is usually lower than or equal to 8 h, preferably lower than or equal to 4 h, more preferably lower than or equal to 2 h and most preferably lower than or equal to 1 h. The residence time is defined by the ratio between the volume of the liquid reaction medium and the flow of the liquid reaction medium.

The reaction of step (b) can be carried in one or more reaction zones, as described for the reaction of step (a).

In a first variant of the second embodiment, no additional compounds are added to the part of the reaction medium from step (a) except the acidic compound necessary to lower the pH. Without willing to be tied by any theory, it is believed that at such a pH, the chlorates ions which are present in the reaction mixture at the end of step (a) are able to oxidize the remaining organic compounds, for instance carboxylic acids still present in the reaction medium after step (a) of the process.

In a second variant of the second embodiment, at least one compound is added to the part of the reaction medium from step (a) in addition to the acidic compound necessary to lower the pH. That compound can be selected from hypochlorite, chlorine, chlorine dioxide and mixture thereof. The hypochlorite can be as described above. The chlorine can liquid or gaseous, preferably gaseous. It can be use pure or diluted by any inert gas like nitrogen, for instance. The chlorine dioxide is generally used as a gas. It can be produced *in situ* by addition of chlorine and chlorite (ClO₂⁻).

In a first aspect of the second variant of that second embodiment, the additional compound is selected from hypochlorite, chlorine and mixture, and the pH is maintained at a value higher than or equal to 2 and lower than 6, preferably at a value higher than or equal to 3 and lower than 5.

In a second aspect of the second variant of that second embodiment, the additional compound is selected from chlorine, chlorate, chlorine dioxide and mixture thereof and the pH is maintained at a value higher than or equal to 0.01 and lower than 3, preferably at a value higher than or equal to 0.01 and lower than 2.

In a third aspect of the second variant of that second embodiment, the additional compound selected is chlorine and UV light. UV light can also be used in the first variant of the second embodiment.

### Example 1

A glass thermostated jacketed reactor having a working volume of 11 and fitted with a vertical condenser has been supplied with 269 g of a brine containing per kg, 4.76 g of 3-chloropropane-1,2-diol, 5.03 g of 1,3-dichloro-2-propanol, 2.39 g of 2,3-dichloro-1-propanol, 0.17 g of glycerol (1,2,3-propanetriol), 217 g of sodium chloride, the balance being water. The TOC of that brine was 4.2 g C/l and the calculated COD was 11.5 g O/kg. That brine has been heated at reflux (∼ 107 °C) under atmospheric pressure (∼ 1013 mbar absolute) and under stirring (magnetic bar). To the heated brine, a first fraction (63.2 g) of an aqueous hypochlorite solution containing per kg, 1.532 mol of sodium hypochlorite (NaOCl), 0.006 mol of sodium chlorate (NaClO₃), 0.100 mol of sodium hydroxide, 1.54 mol of sodium chloride, the balance being demineralized water has been added at once (time zero). A second, a third and a fourth fraction (respectively of 62.7 g, 63.8 g and 63.5 g) have been added, each at once, after respectively 15, 30 and 45 minutes.

The pH of the resulting mixtures has been maintained at a value of 8 (+/- 0.1) at 106 °C (8.5 +/- 0.1 at 25 °C) by regular addition of a sodium hydroxide solution (1 M) during the first 20 minutes (45 ml of NaOH 1 M added), and by regular addition of a hydrogen chloride solution (1 M) after the first 20 minutes. After 45 min, samples have been regularly withdrawn from the reaction mixture for analysis.

The samples have been analyzed by iodometry (ClO⁻ and ClO₃⁻) and mercurimetry (Cl⁻). The samples have been treated with an excess of sodium sulfite and then analyzed for their TOC content according to the methods mentioned above.

The results have been summarized in Table 1.

**Table 1**

| Ex. | ClO-/COD (gCl2/gCl2) | Time (min) | pH | ClO3- (mmol/kg) | TOC (mgC/l) | TOC conv (%) |
|---|---|---|---|---|---|---|
| 1 | 2.0 | 45 | 8.43 | 49 | 63 | 97.1 |
| | | 75 | 8.00 | 88 | 18 | 99.2 |
| | | 105 | 8.00 | 90 | 12 | 99.4 |
| | | 135 | 8.00 | 90 | 11 | 99.5 |
| | | 165 | 7.99 | 92 | 11 | 99.5 |
| | | 285 | 7.97 | 83 | 11 | 99.5 |

The quantity of ClO⁻ and the COD have been expressed in g Cl₂ according to the following rules : 1 g ClO⁻ corresponds to 1.38 g Cl₂, and 1 g O corresponds to 4.43 g of Cl₂.

### Examples 2 and 3

The procedure of example 1 has been followed except that the amount of the hypochlorite added and the pH have been modified as described in Table 2.

**Table 2**

| Ex. | ClO-/COD (gCl2/gCl2) | Time (min) | pH | ClO3- (mmol/kg) | TOC (mgC/l) | TOC conv (%) |
|---|---|---|---|---|---|---|
| 1 | 2.0 | 165 | 7.99 | 92 | 11 | 99.5 |
| 2 | 2.0 | 165 | 8.1 | 101.5 | 7 | 99.7 |
| 3 | 1.57 | 165 | 7.99 | 48.8 | 15 | 99.4 |

### Examples 4 to 7

The procedure of example 1 has been followed except that the brine to be treated did not contain any monochloropropanediol, that the amount of the hypochlorite added and the pH have been modified as described in Table 3, where the results have also been summarized.

**Table 3**

| Ex. | ClO-/COD (gCl2/gCl2) | Time (min) | pH | ClO3- (mmol/kg) | TOC (mgC/l) | TOC conv (%) |
|---|---|---|---|---|---|---|
| 4 | 2.7 | 165 | 9.30 | 13 | 16 | 95.9 |
| 5 | 2.8 | 165 | 8.1 | 27.7 | < 5 | > 97 |
| 6 | 2.0 | 165 | 12.2 | 6.9 | 120 | 69.6 |
| 7 | 2.0 | 165 | 8.8 | 13 | < 5 | > 97 |

### Example 8

A first glass thermostated jacketed reactor (R1) having a working volume of 400 ml, fitted with a vertical refrigerant and a magnetic bar, has been supplied continuously with:
■ a brine containing per kg, 1.989 g of ethylene glycol, 3.580 g of formic acid, 16.53 g of sodium chloride, the balance being water. The calculated TOC of that brine was 1.70 g C/l and the calculated COD was 3.81 g O/kg (16.91 g Cl₂/kg).
■ a first stream of an aqueous hypochlorite solution containing per kg, 1.550 mol of sodium hypochlorite (NaOCl, 109.92 g Cl₂/kg)), 0.0123 mol of sodium chlorate (NaClO₃), 0.133 mol of sodium hydroxide, 1.708 mol of sodium chloride, the balance being demineralized water. A second glass thermo stated jacketed reactor (R2) having a working volume of 400 ml, fitted with a vertical refrigerant and a magnetic bar, has been supplied continuously with:

■ the liquid mixture exiting the first reactor by continuous overflow
■ a second stream of the aqueous hypochlorite solution.

A third glass thermostated jacketed reactor (R3) having a working volume of 307 ml and fitted with a vertical refrigerant has been supplied continuously with:
■ the liquid mixture exiting the second reactor by continuous overflow.
   The reaction medium in the first and second reactor have been heated at reflux (∼ 105 °C) under atmospheric pressure (∼ 1013 mbar absolute) and under stirring (magnetic bar). The reaction medium in the third reactor has been heated to a temperature just below its boiling point under atmospheric pressure with no stirring. The first two reactor simulate perfectly stirred tanks reactors while the third one simulate a plug-flow reactor.
   The pH of the reaction medium in the first two reactors is regulated by addition of a 37% hydrogen chloride aqueous solution.
   The top of the vertical refrigerants has continuously been flushed with nitrogen, and the flushed gas has been trapped in a scrubber containing an aqueous solution of NaOH 3M.
   The samples have been analyzed by iodometry (ClO⁻ and ClO₃⁻) and mercurimetry (Cl⁻). The samples have been treated with an excess of sodium sulfite and then analyzed for their TOC content according to the methods mentioned above. Carboxylic acids have been measured by ionic chromatography and aldehydes have been measured by high performance liquid chromatography (HPLC) after derivatization into hydrazone. The flushed gas have been analyzed by gas chromatography and the scrubber content has been analyzed for hypochlorite by iodometry and for weak bases by acidimetry.

The results have been summarized in Table 4.

### Examples 9 and 10

■ The procedure of example 8 has been followed except that the hypochlorite solution contained per kg, 1.327 mol of sodium hypochlorite (NaOCl, 94.10 g Cl₂/kg)), 0.0037 mol of sodium chlorate (NaClO₃), 0.58 mol of sodium hydroxide, 1.914 mol of sodium chloride, the balance being demineralized water.

The results have been summarized in Table 4.

**Table 4**

| Ex. | Brine) (ml/h) | ClO⁻ (ml/h) | ClO⁻ (ml/h) | Residence time (min) | | | pH (25°C) | | | ClO₃⁻ (mmol/kg) | TOC (mgC/l) | TOC conv(%) |
|---|---|---|---|---|---|---|---|---|---|---|---|---|
| | (R1) | (R1) | (R2) | (R1) | (R2) | (R3) | (R1) | (R2) | (R3) | | | |
| 8 | 1080 | 182 | 91 | 16.4 | 14.7 | 12.5 | 6.2 | 6.1 | 6.1 | 40.2 | 8 | 99.4 |
| 9 | 1080 | 212 | 106 | 16.9 | 14.9 | 12.6 | 8.9 | 9.5 | 9.0 | 7.8 | 210 | 83.5 |
| 10 | 1080 | 212 | 106 | 16.5 | 13.8 | 11.7 | 8.5 | 8.8 | 8.3 | 29 | 110 | 90.7 |

## Claims

1. Process for degrading organic substances in an aqueous composition comprising a step (a) wherein, in a liquid reaction medium, at a controlled pH, said aqueous composition is reacted with at least one composition comprising hydroxide ions (OH⁻) and hypochlorite in a molar ratio between hydroxide and hypochlorite higher than or equal to 0.001 and lower than 1.5, in order to oxidize said organic substances.

2. Process according to claim 1, wherein the composition comprising hydroxide ions (OH⁻) and hypochlorite, in addition contains chlorate, of which the content expressed as NaClO₃, is higher than or equal to 0.1 mmol/kg and lower than or equal to 100 mmol/kg.

3. Process according to claim 1 or 2 comprising a further step (b), wherein, at least one part of the reaction medium of step (a) is subjected to an acidification operation in order to bring the pH at a second value lower than the first pH value of step (a) and the organic substances are further oxidized.

4. Process according to claim 3, wherein one compound selected from hypochlorite, chlorine, chlorine dioxide or a mixture thereof, is added to step (b).

5. Process according to any of claims 2 to 4, wherein the composition containing chlorate, hydroxide ions (OH⁻) and hypochlorite of step (a) is an aqueous solution containing hypochlorous acid or a metal salt of hypochlorous acid, preferably a Ca or a Na salt, chloric acid or a metal salt of chloric acid, preferably a Ca or a Na salt, or a mixture thereof.

6. Process according to any of claims 1 to 5 wherein step (a) and step (b) are carried out in a continuous mode.

7. Process according to any of claims 1 to 6 wherein the reaction of step (a) is carried out at a pH higher than or equal to 6 and lower than or equal to 11, at a temperature higher than or equal to 10 °C and lower than or equal to 200 °C, at a pressure higher than or equal to 1 bar (absolute) and lower than or equal to 11 bar, for a duration higher than or equal to 0.05 h and lower than or equal to 8 h when step (a) of the process is carried out under discontinuous mode and for a residence time higher than or equal to 0.05 h and lower than or equal to 8 h when step (a) of the process is carried out under continuous mode.

8. Process according to any of claims 1 to 7 wherein step (a) of the process is carried out under continuous mode, and wherein the reaction of step (a) is carried out in at least two consecutive reaction zones, at least one of which is operated under perfectly mixed regime and another one of which is operated under plug flow regime.

9. Process according to any of claims 1 to 8 wherein the reaction of step (b) is carried out at a pH higher than or equal to 0.01 and lower than 6, at a temperature higher than or equal to 10 °C and lower than or equal to 200 °C, at a pressure higher than or equal to 1 bar (absolute) and lower than or equal to 11 bar, for a duration higher than or equal to 0.05 h and lower than or equal to 8 h when step (b) of the process is carried out under discontinuous mode and for a residence time higher than or equal to 0.05 h and lower than or equal to 8 h when step (b) of the process is carried out under continuous mode

10. Process according to any of claims 1 to 9 wherein the aqueous composition containing the organic substances to be treated originates in a process for manufacturing an epoxide or in a process form manufacturing a chlorinated organic compound or in both processes.
